# EUROPÄISCHE PATENTSCHRIFT

(11) **EP 0 614 024 B1**
(45) Veröffentlichungstag und Bekanntmachung des Hinweises auf die Patenterteilung: **04.09.1996**
(21) Anmeldenummer: 94103230.2
(22) Anmeldetag: 03.03.1994
(51) Int. Cl.: F16D 65/16

(54) **Zuspannvorrichtung für eine Scheibenbremse**
Actuator for a disc brake
Actionneur pour un frein à disque

(30) Priorität: 05.03.1993 DE 4307019
(43) Veröffentlichungstag der Anmeldung: 07.09.1994
(73) Patentinhaber: PERROT BREMSEN GmbH, D-68229 Mannheim (DE)
(72) Erfinder: Antony, Paul, Dipl.-Ing., D-68642 Bürstadt (DE); Baumgärtner, Rainer, Dipl.-Ing., D-68309 Mannheim (DE); Bielawski, Andrzej, Dipl.-Ing., D-68526 Ladenburg (DE); Macke, Wlodzimierz, Dipl.-Ing., D-68519 Viernheim (DE); Rupprecht, Bernd, D-68535 Edingen-Neckarhausen (DE); Strauss, Wilfried, Dipl.-Ing., D-69483 Wald-Michelbach (DE); Tempel, Jürgen, Dipl.-Ing., D-67591 Wachenheim (DE)
(74) Vertreter: Patentanwälte Leinweber & Zimmermann

(56) Entgegenhaltungen:
- EP-B- 0 291 071
- DE-A- 3 411 745
- DE-A- 4 032 885
- DE-C- 2 614 321

## Beschreibung

Die Erfindung betrifft eine Zuspannvorrichtung für eine Scheibenbremse, insbesondere für eine Gleitsattelscheibenbremse, mit einer parallel zur Bremsscheibenebene angeordneten Zuspannwelle, die sich auf der bremsscheibenzugewandten Seite über eine einen Kreisbogen beschreibende und in einer entsprechenden Lagerschale gelagerte erste Kontur an einem gegen die Bremsscheibe beweglichen Druckstück und an der bremsscheibenabgewandten Seite über eine zu der ersten Kontur exzentrische zweite Kontur an einem Element abstützt, zu dem das Druckstück relativbeweglich ist.

Eine Zuspannvorrichtung der vorstehend beschriebenen Art ist aus der DE 40 32 885 A1 bekannt. Die erste Kontur und die Lagerschale greifen dabei derart ineinander, daß die Zuspannwelle gleichzeitig auch als Lagerung für das Druckstück dienen kann, weshalb eine Lagerung bzw. Führung des Druckstücks entbehrlich ist. Die zweite Kontur ist bei der bekannten Zuspannvorrichtung in Form eines Kreisbogens ausgeführt. Da die beiden Kreisbögen, nämlich derjenige der ersten Kontur und derjenige der zweiten Kontur exzentrisch zueinander liegen, führt das Druckstück bei Verdrehen der Zuspannwelle eine Pendelbewegung in einer senkrecht zur Bremsscheibenebene liegenden Ebene aus.

Wegen der daraus resultierenden Schrägstellung des Druckstücks kommt es beim Bremsen zu einer entsprechenden Schrägstellung der Bremsbacken, wodurch zum einen der Bremsvorgang selbst leidet, zum anderen aber auch eine ungleichmäßige Abnutzung der Bremsbeläge erfolgt.

Bei den aus den Druckschriften DE 26 14 321 C2, EP 0 291 071 B1 und DE 34 11 745 A1 bekannten Zuspannvorrichtungen sind die Zuspannwelle auf der einen Seite und das Druckstück auf der anderen Seite jeweils durch geeignete Maßnahmen entkoppelt, so daß es zu keiner Pendelbewegung des Druckstückes kommt. Die Entkopplung erfolgt dabei durch eine Kugel, durch eine querverschiebliche Platte bzw. durch einen Stößel zwischen der Zuspannwelle und dem Druckstück. Die Entkopplung führt aber dazu, daß Zuspannwelle und Druckstück einander nicht halten bzw. führen können, weshalb bei den genannten Zuspannvorrichtungen nach dem Stand der Technik flexible Halterungen für die Zuspannwelle erforderlich sind, vgl. beispielsweise Feder 86 in der DE 26 14 321 C2. Durch die Entkopplung ist die Lage der Zuspannwelle instabil, wodurch die Zuspannung ungleichmäßig wird.

Der Erfindung liegt die Aufgabe zugrunde, eine Zuspannvorrichtung der eingangs genannten Art insofern zu verbessern, als Druckstück und Zuspannwelle einander halten bzw. führen, aber dennoch keine Beeinträchtigung der Bremswirkung und keine ungleichmäßige Abnutzung der Bremsbeläge durch eine Pendelbewegung auftreten.

Erfindungsgemäß wird die gestellte Aufgabe dadurch gelöst, daß die zweite Kontur aus mindestens zwei Kreisbögen zusammengesetzt ist, deren Mittelpunkte und Radien so gewählt sind, daß der Betrag einer bei Verdrehen der Zuspannwelle auftretenden Bewegung des Druckstücks relativ zur Zuspannwelle und in Richtung parallel zur Bremsscheibenebene minimiert ist.

Dabei liegt der Erfindung die verblüffend einfache Erkenntnis zugrunde, daß durch geeignete Wahl der zweiten Kontur die Relativbewegung so klein gehalten bzw. eliminiert werden kann, daß ein Ineinandergreifen von Zuspannwelle und Druckstück zur Lagerung bzw. Führung des Druckstücks durch die Zuspannwelle oder umgekehrt zu keinen Nachteilen beim Bremsen bzw. bei der Abnutzung der Bremsbeläge führt.

Verglichen mit den bekannten Zuspannvorrichtungen ist die erfindungsgemäße Zuspannvorrichtung kompakter und kommt mit weniger Einzelteilen aus.

Nach einer besonders bevorzugten Ausführungsform tangieren einander benachbarte Kreisbögen der zweiten Kontur einander an der gemeinsamen Grenze. Durch diesen "sanften" Übergang von einem Kreisbogen zum anderen wird verhindert, daß bei der Zuspannung "Stufen" oder andere Unstetigkeiten auftreten.

Besonders bevorzugt ist es, daß die zweite Kontur eine Zykloide ist. Eine Zykloide kann aufgefaßt werden als eine aus unendlich vielen Kreisbögen zusammengesetzte Kurve. Hat die zweite Kontur die Form einer Zykloide, so tritt bei Verdrehen der Zuspannwelle keinerlei Bewegung des Druckstücks relativ zur Zuspannwelle und in Richtung parallel zur Bremsscheibenachse auf.

Nach einer anderen Ausführungsform der Erfindung kann die zweite Kontur aus zwei Kreisbögen gebildet sein, von denen einer dem Leerhub, d.h. dem Hub zum Überwinden des Bremslüftspiels, und einer dem Krafthub zugeordnet ist. Mit anderen Worten liegt bei dieser Ausgestaltung die gemeinsame Grenze genau an dem Übergang zwischen dem Leerhub und dem Krafthub.

Dabei wird es bevorzugt, daß der dem Leerhub zugeordnete Kreisbogen der zweiten Kontur einen kleineren Radius als der dem Krafthub zugeordnete Kreisbogen hat. Da die Flächenpressung zwischen der zweiten Kontur und demjenigen Element, zu dem das Druckstück relativbeweglich ist, im Leerhub noch relativ gering ist, wirkt es sich nicht nachteilig aus, wenn sich das Druckstück in diesem Bereich geringfügig in Richtung parallel zur Bremsscheibenachse bewegt. Die Flächenpressung ist in diesem Bereich auch relativ gering, so daß der kleinere Radius auch insofern nicht nachteilig ist. Mit einsetzendem Krafthub stützt sich die Zuspannwelle dann aber mit einem Kreisbogen mit größerem Radius ab, was im Hinblick auf die erhöhte Flächenpressung auch erforderlich ist. Gleichzeitig ist die Bewegung des Druckstücks relativ zur Zuspannwelle und in Richtung parallel zur Bremsscheibenebene bei größerem Radius geringer.

Zur Verminderung der Reibung kann erfindungsgemäß eine Drehlagerung zwischen der ersten Kontur und der Lagerschale vorgesehen sein.

Zur Stabilisierung der Gesamtanordnung kann es ferner erfindungsgemäß vorgesehen sein, daß die zweite Kontur axial länger als die erste Kontur ist.

Ferner kann erfindungsgemäß das Druckstück im Bremssattel in seitlichen kalottenförmigen Führungen mit geringem Lagerspiel allseitig geführt sein. Dadurch ist eine radiale und seitliche Führung des Sruckstückes gewährleistet.

Schließlich kann erfindungsgemäß eine Vorspannung in Richtung eines Lösens der Bremse vorgesehen sein, wobei die Vorspannung bevorzugt mindestens eine das Druckstück in Richtung weg von der Bremsscheibe vorspannende Druckfeder aufweist.

Nachstehend ist die Erfindung anhand eines bevorzugten Ausführungsbeispiels unter Bezugnahme auf die beiliegende Zeichnung mit weiteren Einzelheiten näher erläutert.

Dabei zeigen
- Fig. 1: einen Schnitt senkrecht zur Bremsscheibenachse einer Scheibenbremse mit einer Zuspannvorrichtung nach einem Ausführungsbeispiel der Erfindung,
- Fig. 2: einen Schnitt durch die Scheibenbremse nach Fig. 1, wiederum senkrecht zur Bremsscheibenachse, jedoch auch senkrecht zu dem Schnitt nach Fig. 1,
- Fig. 3: eine Draufsicht auf die Zuspannwelle in der Scheibenbremse nach den Fig. 1 und 2,
- Fig. 4: eine Seitenansicht der genannten Zuspannwelle und
- Fig. 5: die Einzelheit Z aus Fig. 4 in vergrößertem Maßstab.

Bei der in der Zeichnung dargestellten Scheibenbremse handelt es sich um eine Gleitsattelscheibenbremse. Sie weist einen Bremssattel 1 auf, der in üblicher Weise mit seinen beiden Schenkeln eine Bremsscheibe 2 übergreift. Beidseits der Bremsscheibe sind Bremsbeläge 3, 4 an Belagträgern 5 in einem nicht dargestellten Bremsenträger bzw. im Bremssattel 1 geführt und abgestützt. Der Bremssattel 1 ist in nicht näher dargestellter Weise mit Hilfe von Führungsmitteln quer zur Bremsscheibe verschieblich gelagert. Der Bremssattel 1 weist einseitig eine Zuspannvorrichtung 6 zur Betätigung der Bremse auf.

Die Zuspannvorrichtung besteht im wesentlichen aus einem Bremshebel 7, der mit einer parallel zur Bremsscheibenebene angeordneten Zuspannwelle 8 verbunden ist, und einem im Bremssattel 1 verschieblichen Druckstück 9, in das mittig in der Ebene der Bremsenachse A der Zuspannvorrichtung 6 eine Druckspindel 10 eingeschraubt ist. Zur Bremsscheibe 2 weisend ist die Druckspindel 10 mit einem sich am Belagträger 5 abstützenden Druckteil 11 gekoppelt. Das Druckteil 11 erstreckt sich annähernd über die Belagbreite. Das Druckstück 9 ist in steilichen kalottenförmigen Führungen 25 allseitig mit geringem Lagerspiel im Bremssattel 1 geführt.

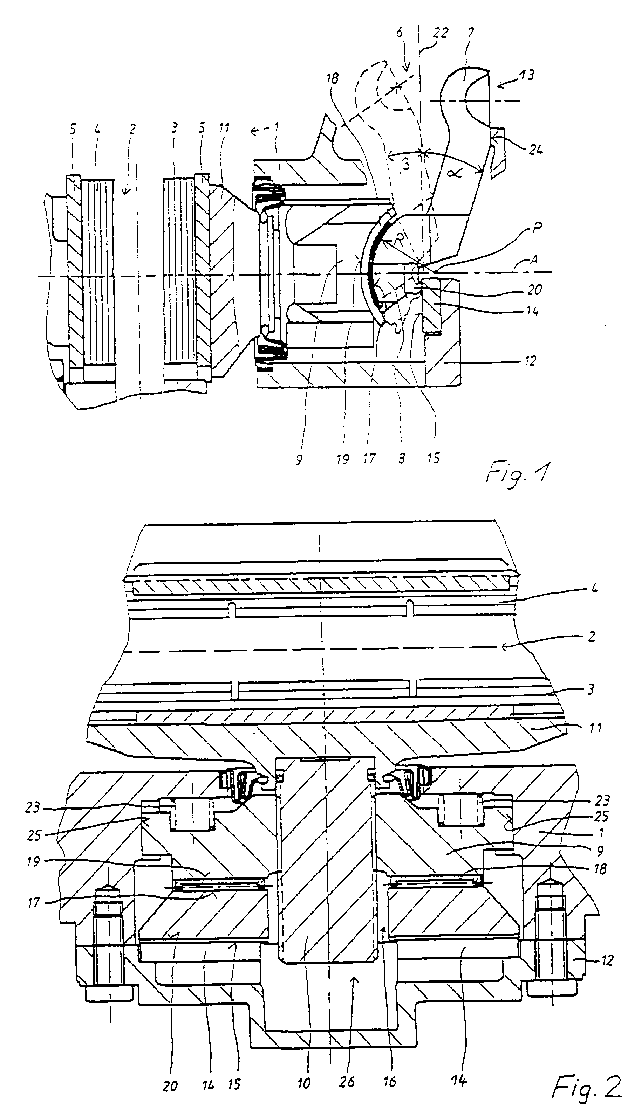

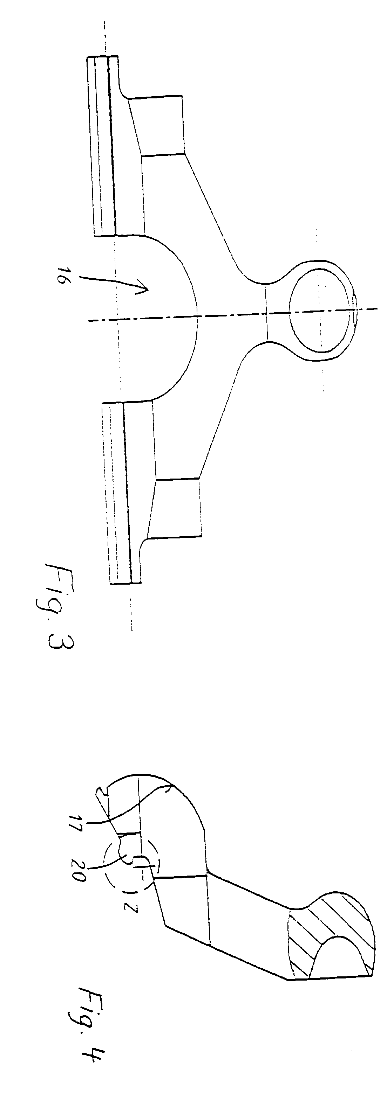

Am Bremssattel 1 ist ein Deckel 12 festgelegt. Damit ist eine Verbindung zu einem nicht dargestellten Bremszylinder hergestellt. Der Bremshebel 7 stellt die Verbindung zwischen dem Bremszylinder bzw. einem ebenfalls nicht dargestellten Bremsgestänge und der Zuspannwelle 8 her. Am Deckel 12 oder diesem vorgelagert ist im Bremssattel 1 in einer Ebene parallel zur Bremsscheibe 2 eine Stützplatte 14 angebracht. Sie weist eine Stützfläche 15 auf, an der sich die Zuspannwelle 8 abstützt. Die Stützplatte 14 kann geteilt oder einstückig sein. Ihre Länge hängt von der nachfolgend erläuterten Ausführung der Zuspannwelle 8 ab. Nach den Fig. 2 und 3 ist im mittleren Bereich der Zuspannwelle 8 ein freier Durchgang 16 zur axialen Durchführung der Druckspindel 10 ausgebildet.

Selbstverständlich kann die Zuspannwelle 8 auch ohne freien Durchgang 16, also in einer durchgängigen Kontur ausgeführt sein, sofern die Zuspannung beispielsweise über zwei Druckspindeln 10 erfolgt, die jeweils am äußeren Ende des Druckstücks 9 eingeschraubt sind.

Die besonders kompakte Bauweise der Zuspannvorrichtung ermöglicht die Schaffung eines Freiraumes 26 auf der bremsscheibenabgewandten Seite der Zuspannwelle 8 und damit im kräftefreien Bereich der Bremse. Der Freiraum kann zur Aufnahme einer Nachstellvorrichtung dienen, wie sie beispielsweise in einer mit gleichem Zeitrang hinterlegten Patentanmeldung beschrieben ist. Die Nachstellvorrichtung kann daher als vorgefertigte Baueinheit eingebaut werden. Sie ist geringer Beanspruchung ausgesetzt.

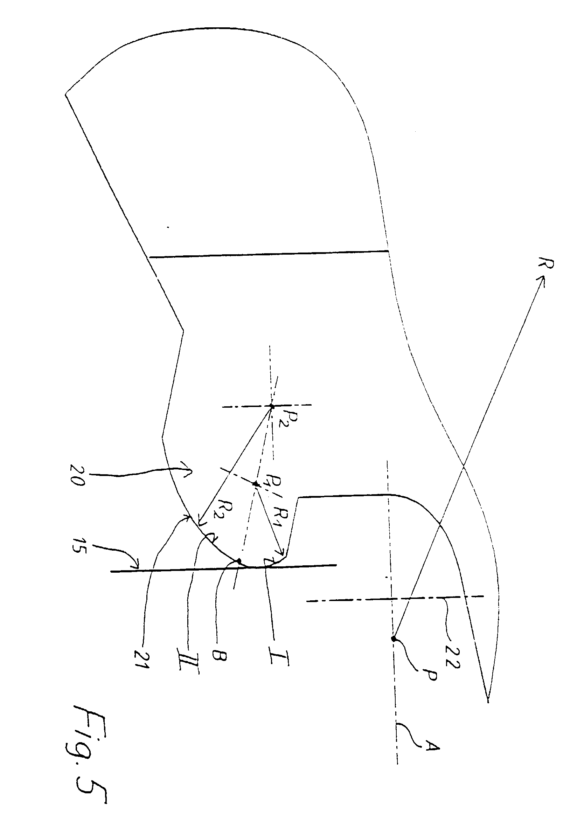

Die Fig. 3 und 4 zeigen die Kontur der Zuspannwelle 8. Fig. 5 zeigt eine Vergrößerung der Einzelheit Z.

Die Zuspannwelle 8 weist bremsscheibenzugewandt einen etwa halbzylindrischen Ansatz 17 mit Radius R auf. Der Mittelpunkt P des Zylinders liegt auf der Bremsenachse A. Die Mantelfläche des Ansatzes 17 erstreckt sich parallel zu der entsprechend der Verdrehung wandernden Drehachse (Strecke P₁, P₂ siehe unten) der Zuspannwelle 8. Der Ansatz 17 ist über eine zwischengelagerte Drehlagerung 18 (Wälz- und/oder Gleitlager) in entsprechenden innenzylindrischen Flächen 19 des Druckstücks 9 gelagert. Dadurch wird zwischen diesen beiden Teilen eine relativ großfläche Anlagekontur zur allseitigen Abstützung und gleichmäßigen Druckübertragung geschaffen. Selbstverständlich können der Ansatz und die innenzylindrische Fläche auch an den Teilen 8, 9 umgekehrt ausgebildet sein, jedoch wird die beschriebene Ausführung bevorzugt.

Die Mantelfläche einer sich parallel zu dem Ansatz 17 erstreckenden und an der Stützfläche 15 anliegenden Druckleiste 20 wird von einer Kurve 21 gebildet, die sich durch das Aneinanderfügen mehrerer Kurvenabschnitte (hier 2) ergibt. Der erste Abschnitt I ist Teil eines Kreisbogen mit dem Radius R₁ um den Punkt P₁, wobei dieser Punkt nicht mit dem Punkt P zusammenfällt. Der sich an den ersten Abschnitt I anschließende zweite Abschnitt II ist Teil eines Kreisbogens mit dem Radius R₂ um P₂. P₂ fällt weder mit P noch mit P₁ zusammen. Der Radius R₁ ist kleiner als der Radius R₂. Die Radien R₁ und R₂ und die jeweilige Lage der Punkte P₂ und P₁ sind so gewählt, daß die beiden Kreisbögen einander in einer Grenzlinie B tangieren.

Durch die dargestellte Ausführung der Kurve 21 der Mantelfläche der Druckleiste 20 wird insbesondere folgender Vorteil erreicht. Bei einer anfänglichen Verdrehung der Zuspannwelle 8 zur Überbrückung des Leerhubes innerhalb des Lüftspiels rollt die Mantelfläche des ersten Kurvenabschnitts I mit dem kleineren Radius R₁ entlang der Stützfläche 15 am Bremssattel radial einwärts bis zu der Grenzlinie B. Da die Flächenpressung zwischen der Mantel- und der Stützfläche im Leerhub noch relativ gering ist, wirkt es sich nicht nachteilig aus, wenn der Exzenter in diesem Bereich eine geringfügige Aufwärtsbewegung auf einem Kreisbogenabschnitt in Richtung einer Vertikalen 22 vollzieht. Das Druckstück 9 wird dabei axial in Richtung Bremsscheibe 2 verschoben.

Bei einer Weiterdrehung der Zuspannwelle in den Krafthub β rollt die Mantelfläche des sich anschließenden zweiten Kurvenabschnitts II mit dem größeren Radius R₂ von der Grenzlinie B weiter auf der Stützfläche 15 radial abwärts ab. Dadurch wird zum einen sichergestellt, daß die im Krafthub β eintretende Erhöhung der Flächenpressung durch den großen Radius R₂ besser aufgenommen wird. Hauptsächlich wird aber das Ziel erreicht, daß der Exzenter bzw. der Punkt P die Vertikale 22 nicht überschreitet. Damit erfolgt kein nachteiliges Pendeln. Die Abrollstrecke radial einwärts durch den größeren Radius R₂ bei gleichzeitiger axialer Verschiebung des Druckstücks 9 ist nämlich größer als die erste Abrollstrecke des Radius R₁.

Wie sich aus den obigen Erläuterungen ergibt, "wandert" die Drehachse der Zuspannwelle 8, insbesondere im Abschnitt II, kontinuierlich radial einwärts schneller als die Exzentermitte auf dem Kreisbogen in Richtung der Vertikalen 22 nach oben schwenkt. Da hierdurch die Vertikale durch eine "Neutralisierung" der Pendelbewegung im Krafthub β nicht überschritten wird, erfolgt eine annähernd linear verlaufende Zuspannung entlang der Bremsenachse A in Richtung Bremsscheibe 2, ohne daß es hierbei zu Verspannungen in der Sattelführung 25 kommt.

Aus der Anordnung der Druckleiste 20 gegenüber der Stützfläche 15 des Bremssattel 1 ergibt sich weiterhin noch der Vorteil, daß herstellungs- und montagebedingte Toleranzen gegenüber der Drehlagerung ausgeglichen werden. Selbstverständlich ist auch hier die Umkehr: Stützfläche 15/Druckleiste 20 zwischen der Zuspannwelle 8 und der Stützplatt 14 möglich. Die beschriebene Ausführung wird jedoch bevorzugt.

Mittels mindesten einer Druckfeder 23 wird die Zuspannung (Druckstück, Lager, Zuspannwelle) in Richtung Stützfläche 15 und damit der Bremshebel 7 gegen eine Sattelanlage 24 vorgespannt.

Fig. 2 zeigt, daß die Druckleiste 20 länger als das Drehlager 18 ausgebildet ist. Dadurch wird einerseits den Lagerungsbelastungen entsprochen. Andererseits ist dadurch eine optimale Raumausnutzung innerhalb des Sattels möglich. Selbstverständlich ist das Zuspannprinzip nach Fig. 3, insbesondere die Ausführung und Lagerung der Zuspannwelle, auch auf eine hydraulische Scheibenbremse mit mechanischer Betätigung als Feststellbremse anwendbar. Da bei diesem Anwendungsfall aufgrund kleinerer Zuspannkräfte geringere Flächenpressungen entgegen der Sattelabstützung auftreten, kann der Verlauf der Kurvenabschnitte I, II auch genau umgekehrt, also erst der größere und dann anschließend der kleinere Radius, zur Bildung einer gemeinsamen Kurve 21 verlaufen. Dadurch wird eine sehr genaue lineare Zuspannbewegung des Druckstücks 9 erzielt.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: Bremssattel
- 2: Bremsscheibe
- 3: Bremsbelag
- 4: Bremsbelag
- 5: Belagträger
- 6: Zuspannvorrichtung
- 7: Bremshebel
- 8: Zuspannwelle
- 9: Druckstück
- 10: Druckspindel
- 11: Druckteil
- 12: Deckel
- 14: Stützplatte
- 15: Stützfläche
- 16: Durchgang
- 17: Ansatz
- 18: Drehlagerung
- 19: innenzylindrische Fläche
- 20: Druckleiste
- 21: Mantelkurve
- 22: Vertikale
- 23: Druckfeder
- 24: Sattelanlage
- 25: Führung
- 26: Freiraum
- I: Kurvenabschnitt
- II: Kurvenabschnitt
- A: Bremsenachse
- B: Grenzlinie
- P: Kreismittelpunkt
- P₁: Kreismittelpunkt
- P₂: Kreismittelpunkt
- R: Radius
- R₁: Radius
- R₂: Radius
- α: Leerhub
- β: Krafthub

## Patentansprüche

1. Zuspannvorrichtung für eine Scheibenbremse, insbesondere für eine Gleitsattelscheibenbremse, mit einer parallel zur Bremsscheibenebene angeordneten Zuspannwelle (8), die sich auf der bremsscheibenzugewandten Seite über eine einen Kreisbogen beschreibende und in einer entsprechenden Lagerschale (19) gelagerte erste Kontur (17) an einem gegen die Bremsscheibe (2) beweglichen Druckstück (9) und an der bremsscheibenabgewandten Seite über eine zu der ersten Kontur (17) exzentrische zweite Kontur (21) an einem Element (14) abstützt, zu dem das Druckstück (9) relativbeweglich ist,
dadurch gekennzeichnet,
daß die zweite Kontur (21) aus mindestens zwei Kreisbögen (I, II) zusammengesetzt ist, deren Mittelpunkte (P₁, P₂) und Radien (R₁, R₂) so gewählt sind, daß der Betrag einer bei Verdrehen der Zuspannwelle (8) auftretenden Bewegung des Druckstücks (9) relativ zur Zuspannwelle (8) und in Richtung parallel zur Bremsscheibenebene minimiert ist.

2. Zuspannvorrichtung nach Anspruch 1, dadurch gekennzeichnet, daß einander benachbarte Kreisbögen (I, II) der zweiten Kontur (21) an der gemeinsamen Grenzlinie (B) einander tangieren.

3. Zuspannnvorrichtung nach Anspruch 1 oder 2, dadurch gekennzeichnet, daß die zweite Kontur (21) eine Zykloide ist.

4. Zuspannvorrichtung nach Anspruch 1 oder 2, dadurch gekennzeichnet, daß die zweite Kontur (21) aus zwei Kreisbögen (I, II) gebildet ist, von denen einer dem Leerhub ( α ) und einer dem Krafthub ( β ) zugeordnet ist.

5. Zuspannvorrichtung nach Anspruch 4, dadurch gekennzeichnet, daß der dem Leerhub ( α ) zugeordnete Kreisbogen (I) der zweiten Kontur (21) einen kleineren Radius (R₁) als der dem Krafthub ( β ) zugeordnete Kreisbogen (II) hat.

6. Zuspannvorrichtung nach einem der vorangehenden Ansprüche, gekennzeichnet durch eine Drehlagerung (18) zwischen der ersten Kontur (17) und der Lagerschale (19).

7. Zuspannvorrichtung nach einem der vorangehenden Ansprüche, dadurch gekennzeichnet, daß die zweite Kontur (21) axial länger als die erste Kontur (17) ist.

8. Zuspannvorrichtung nach einem der vorangehenden Ansprüchen, dadurch gekennzeichnet, daß das Druckstück (9) im Bremssattel (1) in seitlichen kalottenförmigen Führungen (25) allseitig geführt ist.

9. Zuspannvorrichtung nach einem der vorangehenden Ansprüche, gekennzeichnet durch eine Vorspannung (23) in Richtung eines Lösens der Bremse.

10. Zuspannvorrichtung nach Anspruch 9, dadurch gekennzeichnet, daß die Vorspannung eine das Druckstück (9) in Richtung weg von der Bremsscheibe (2) vorspannende Druckfeder (23) aufweist.

## Claims

1. Clamping unit for a disc brake, especially a floating caliper disc brake, with a clamping shaft (8) installed in par el to the brake rotor, with its first machined contour (17) supported by a circular shaped bearing cup (19) within a thrust piece (9) which is movable against the brake disc (2), and on the opposite side of the brake disc with the eccentrically machined second contour (21) abutting an element (14) against which the thrust piece (9) is relative moveable, characterised by, the second machined contour (21) consisting of two circular shapes (I, II) whose centre (P₁, P₂) and radius (R₁, R₂) locations have been positioned so that the amount of movement of the thrust piece (9), relative to the clamping shaft (8) and in parallel direction of the brake disc surface, is minimised during rotation of the clamping shaft (8).

2. Clamping unit according to claim 1., characterised by the adjoining circular shapes (I, II) of the second contour (21) becoming tangent at their mutual border line (B).

3. Clamping unit according to claim 1. or 2., characterised by the second contour (21) being a cycloid.

4. Clamping unit according to claim 1. or 2., characterised by the second contour (21) consisting of two circular shapes (I, II) with one being assigned the no-load stroke (α), and the other the power stroke (β).

5. Clamping unit according to claim 4., characterised by the no-load stroke (α) circular shape (I) utilising a smaller radius (R₁) than the other circular shape (II) assigned to the power stroke (β).

6. Clamping unit according to one of the above listed claims, characterised by a pivot bearing (18) located between the first contour (17) and the bearing cup (19).

7. Clamping unit according to one of the above listed claims, characterised by the second contour (21) being axially longer than the first contour (17).

8. Clamping unit according to one of the above listed claims, characterised by the thrust piece (9) being supported in spherical guide ways (25) within the caliper housing (1).

9. Clamping unit according to one of the above listed claims, characterised by a device (23) applying a pre-load in the release direction of the brake.

10. Clamping unit, according to claim 9, characterised by the pre-load device utilising a compression spring (23) to pre-tension the thrust piece in the opposite direction of the brake disc.

## Revendications

1. Actionneur pour frein à disque, notamment pour frein à disque en forme de selle coulissante, avec un arbre actionneur (8) disposé parallèlement au plan du disque de freinage et prenant appui, du côté adjacent au disque de freinage, sur un organe de pression (9) déplaçable contre le disque de freinage (2), par l'intermédiaire d'un premier profil (10) décrivant un arc de cercle et logé dans une cuvette de palier (19) correspondant, et, du côté éloigné du disque de freinage, par l'intermédaire d'un deuxième profil (21) excentrique par rapport au premier profil (17), sur un élément (14) par rapport auquel l'organe de pression (9), est mobile,
caractérisé en ce que,
le deuxième profil (21) se compose d'au moins deux arcs de cercle (I, II) dont les centres (P₁, P₂) et les rayons (R₁, R₂) sont choisis de telle façon que la quantité de mouvement d'un mouvement se produisant lors d'une rotation de l'arbre actionneur (8) est minimisé par rapport à l'arbre actionneur (8) et dans une direction parallèle au plan du disque de freinage.

2. Actionneur selon la revendication 1, caractérisé en ce que les arcs de cercle voisins (I, II) du deuxième profil (21) sont tangents, mutuellement, à la ligne de délimitation commune (B).

3. Actionneur selon la revendication 1 ou 2, caractérisé en ce que le deuxième profil est une cycloïde.

4. Actionneur selon la revendication 1 ou 2, caractérisé en ce que le deuxième profil (21) est formé par deux arcs de cercle (I, II) dont l'un est associé à la course à vide (α) et l'autre à la course motrice (β).

5. Actionneur selon la revendication 4, caractérisé en ce que l'arc de cercle (I) associé à la course à vide (α), du second profil (21) a un rayon (R₁) inférieur à celui de l'arc de cercle (II) associé à la course motrice (β).

6. Actionneur selon l'une des revendications précédentes, caractérisé par un coussinnet de pivotement (18) entre le premier profil (17) et la cuvette de palier (19).

7. Actionneur selon l'une des revendications précédentes, caractérisé en ce que le deuxième profil (21) est axialement plus long que le premier profil (17).

8. Actionneur selon l'une des revendications précédentes, caractérisé en ce que l'organe de pression (9) est guidée sur tous les côtés dans la selle de freinage (1) dans des guidages latérales en forme de calottes (25).

9. Actionneur selon l'une des revendications précédentes, caractérisé par une précontrainte (23) dans la direction d'un relâchement du frein.

10. Actionneur selon la revendication 9, caractérisé en ce que la précontrainte comprend un ressort de pression (23) sollicitant l'organe de pression (2) dans une direction au loin du disque de freinage (2).
